# EUROPEAN PATENT APPLICATION

(11) **EP 3 929 558 A1**
(43) Date of publication of application: **29.12.2021**
(21) Application number: 20382560.9
(22) Date of filing: 25.06.2020
(51) Int. Cl.: G01N 1/28, G01N 3/08, G01N 3/32, G01N 15/10, G01B 9/02

(54) **A SYSTEM FOR PROVIDING MECHANICAL PERTURBATIONS TO A BIOLOGICAL SAMPLE**

(71) Applicant: Fundació Institut de Ciències Fotòniques, 08860 Castelldefels (ES); Fundació Centre de Regulació Genòmica, 08003 Barcelona (ES)
(72) Inventor: WIESER, Stefan, 08860 CASTELLDEFELS (ES); KARAMATA, Boris, 08860 CASTELLDEFELS (ES); RUPRECHT, Verena, 08003 BARCELONA (ES); REYMOND, Loïc, 08003 BARCELONA (ES)
(74) Representative: Ponti & Partners, S.L.P

(57) **Abstract**

The present invention relates to a system for providing mechanical perturbations to a biological sample, comprising an apparatus which comprises:
- first (∑t) and second (∑b) surfaces arranged opposite to each other to define between them a confining chamber with a confinement height (h), to confine a biological sample, wherein the first (∑t) and second (∑b) surfaces are relatively movable with each other according to an approaching/distancing direction; and
- spacing means comprising:
- measuring means configured and arranged to measure at least part of the confinement height (h);
- driving means operatively connected to the first (∑t) or second (∑b) surfaces to move the same according to the approaching/distancing direction; and
- control means operatively connected to the measuring means and to the driving means, to control the driving means based on the measurements obtained with the measuring means, to vary the confinement height (h).

## Description

### FIELD OF THE INVENTION

The present invention generally relates to a system for providing mechanical perturbations to a biological sample, and more particularly to a system providing an improved confinement chamber for the biological sample, and an accurate control of the dimensions thereof to dynamically adapt to any requested experiment.

### BACKGROUND OF THE INVENTION

Mechanobiology aims at investigating the effects of mechanical stress on cells, tissues and organisms and its mechanistic operation at a molecular level, like for instance the mechanisms underlying proprioception. Thus, the scientific community of mechano-biologists needs to perform experiments in which mechanical force is applied to biological samples in a highly controlled fashion. A basic, but nevertheless very informative experiment, consists of confining cells along one dimension (uniaxial compression), i.e. squeezing them in one direction, and observing biological phenomena with advanced microscopy techniques. The application of other constraints to cells like stretching or shearing is also of interest.

The instrument of choice for applying force on a single cell is the atomic force microscope (AFM) that is able to probe molecular and cellular responses by measuring one cell at a time. However, it is highly desirable to perform simultaneous experiments on a population of cells to extrapolate statistical data, perform screening approaches and extend the range of probable biological length scales from cells to tissues and organisms. This requires an instrument providing a precise and uniform mechanical perturbation of biological samples (cells, multicellular aggregates, tissues and organisms) over a large area for maximizing biological sample throughput while allowing compatibility with microscopy methods.

To the knowledge of the present inventors, such instruments are not available on the market, and quite surprisingly, very few laboratory instruments exist or are reported in the literature.

One such notable instrument is the cell confiner system developed by the company 4Dcell, and referred as 4Dcell dynamic cell confiner system, which constitutes a system for providing mechanical perturbations to a biological sample which comprises the features of the preamble of claim 1 of the present invention, i.e. which comprises an apparatus which comprises:
- first and second surfaces arranged opposite to each other to define between them a confining chamber with a confinement height, to confine a biological sample, wherein said first and second surfaces are relatively movable with each other according to an approaching/distancing direction; and
- spacing means configured and arranged to vary said confinement height, wherein said spacing means comprise driving means operatively connected to at least one of said first and second surfaces to move the same according to said approaching/distancing direction.

In the 4Dcell dynamic cell confiner system, the above mentioned first and second surfaces are defined by respective top and bottom slides. A matrix of carefully designed deformable micropillars of PDMS of well-defined height is placed on a microscope slide covered by cells. Uniform pressure is applied thanks to a vacuum system. This system suffers from a few limitations and can be improved to better serve the life science research community.

Specifically, in the apparatus of the 4Dcell dynamic cell confiner system, in addition to the above mentioned driving means, which are implemented by means of a piston attached to the top slide and controlled by a vacuum source, the spacing means further comprises the above mentioned deformable PDMS micropillars (fabricated in the top slide) placed between both slides in order to separate the same.

To confine the biological sample, the downwards pressure exerted by the piston is slowly and gradually increased (or decreased, from the point of view of the vacuum source), instructed by a controller which only allows to modify the pressure to be exerted, specifically by the user manually tuning the controller to a desired pressure.

It is therefore necessary to provide an alternative to the state of the art which covers the gaps found therein, by providing a system for providing mechanical perturbations to a biological sample, comprising an apparatus which indeed provides a highly accurate and flexible control of the confinement height, so accurate that it could also be varied dynamically during an experiment.

### SUMMARY OF THE INVENTION

To that end, the present invention relates to a system for providing mechanical perturbations to a biological sample, comprising an apparatus which comprises:
- first and second surfaces arranged opposite to each other to define between them a confining chamber with a confinement height, to confine a biological sample, wherein said first and second surfaces are relatively movable with each other according to an approaching/distancing direction; and
- spacing means configured and arranged to vary said confinement height, wherein said spacing means comprise driving means operatively connected to at least one of said first and second surfaces to move the same according to said approaching/distancing direction.

In contrast to the systems known in the prior art, in the system of the present invention, in a characterizing manner, the spacing means further comprise:
- measuring means configured and arranged to measure at least part of the confinement height; and
- control means operatively connected to the measuring means and to said driving means, wherein said control means are configured to control the driving means based on the measurements obtained with the measuring means.

Depending on the embodiment, the measuring means of the system of the present invention are configured and arranged to perform absolute or relative measurements of the confinement height.

For an embodiment, the system of the present invention implements a closed-loop configuration, in which the control means automatically controls the driving means to regulate the confinement height to a desired value, using as feedback the measurements received from the measuring means.

For an alternative embodiment, the system of the present invention implements an open-loop configuration, in which some kind of human intervention is needed, such as to instruct the control means to control the driving means to vary the confinement height to a desired value corresponding to or dependent on the measurements received from the measuring means.

By the system of the present invention, there is no need of building a complex relationship for the control of the confinement height, as the same is accurately measured by the measuring means, and the measured values are directly used to control the driving means, by either of the above described closed- and open- loop configurations.

For an embodiment, the driving means comprise at least one electromechanical transducer (such as a piezoelectric transducer or a voice-coil transducer) attached to one of the first and second surfaces to move the same according to at least said approaching/distancing direction, when receiving a control electrical signal from the control means.

According to an embodiment, the at least one electromechanical transducer is a reversible electromechanical transducer, i.e. an electromechanical transducer which is configured and arranged to operate as both a sensor and an actuator, and the measuring means comprise the at least one reversible electromechanical transducer to use the same as a sensor to perform the measurement of at least part of the confinement height.

For other embodiments, the measuring means comprise other kinds of position detectors or encoders, which are not implemented by means of an electromechanical transducer.

For an embodiment, the first and second surfaces are defined by respective first and second walls (for example, of respective glass slides), wherein one or both of said first and second walls are transparent to light within at least a predetermined wavelength range, and wherein the measuring means are non-contact optical measuring means configured and arranged to measure the confinement height by performing measurements of light within said predetermined wavelength range and coming from at least one of the first and second walls.

When a trans-illumination microscopy arrangement is used to monitor a biological experiment on the biological sample placed within the confinement chamber, both of the above mentioned first and second walls are transparent to light within at least said predetermined wavelength range, while when an epi-illumination microscopy arrangement is used then one of the first and second walls (the one constituting the top wall, for an inverted microscope) is non transparent to light within at least said predetermined wavelength range.

For a preferred embodiment, in contrast to the 4Dcell dynamic cell confiner system, the spacing means and the confining chamber of the system of the present invention are free from any spacer element placed between the first and second surfaces, thus providing accurately distance-controlled minimally invasive culture conditions circumventing biological sample death under micro-confinement pillars, as typically present in conventional assays, and maximizes accessible sample area. In other words, the absence of pillars or of any other kind of spacer element prevents smashing some of the biological samples, and thus allows avoiding heavy danger signals occurring from death-signalling molecular transmitters (lysis) which can potentially bias the experiment, thus affecting the experimental result.

The absence of pillars or of any other kind of spacer element in the confining chamber allows to obtain a high accuracy in the control of the confinement height, and thanks to such a high accuracy in the control of the confinement height no pillars or spacer elements are needed in the confinement chamber.

To elaborate, due to such a high accuracy the system can operate without any spacer element as the provision of a too small confinement height is completely avoided by the combined action of the measurement means, the control means and the driving means, and thanks to the absence of those spacer elements, the course of the approaching/distancing direction displacement to be controlled is neither limited by those spacer elements nor to be divided into consecutive courses to be controlled differently, namely a course during which the spacer elements would contact the first and second surfaces and undergo deformations, and a further course during which such contact would not occur.

According to a further embodiment, the first and second surfaces are also relatively movable with each other according to two rotational movements about at least two respective orthogonal rotary axes, both orthogonal to the above mentioned approaching/distancing direction, and the driving means are configured to move at least one of the first and second surfaces also according to said rotational movements, under the control of the control means, to achieve an accurate parallelism or a desired tilt between the first and second surfaces.

For another embodiment, the first and second surfaces are also relatively movable with each other according to a linear movement, called herein shearing movement, which is orthogonal to the above mentioned approaching/distancing direction (which also corresponds to a linear movement), and the driving means are configured to move at least one of the first and second surfaces also according to said shearing movement, under the control of the control means.

For a further embodiment, the control means are configured to control the driving means to make the same move the at least one of the first and second surfaces according to any of a plurality of trajectories (ramps, saw-tooth, sine etc.) along the approaching/distancing direction and/or along said rotational movements and/or along said shearing movement, wherein each of said plurality of trajectories is variable along time.

For some implementations of said further embodiment, each of said plurality of trajectories follows a repetition pattern, periodic or aperiodic, along time, at the same or at different time scales.

For an embodiment, the control means are configured and arranged to provide and vary any of the above mentioned trajectories dynamically during an experiment, to provide the desired confining, stretching and shearing actions to the biological sample, by controlling the movements according to the approaching direction, the distancing direction, and the shearing movement, respectively.

The system of the present invention further comprises, for an embodiment, a support adapted to temporary attach at least the first and second surfaces, the driving means and the measuring means, to a platform of a microscope in an appropriate position so that the optical axis of the microscope passes through the confining chamber, and quantitative measurement of the biological sample can be thus carried out with the microscope.

For an implementation of that embodiment, the second surface is defined by a bottom glass slide, and said support is a bottom glass slide holder compatible with state-of-the-art inverted microscopes. Such a holder includes heating means, for a variant of that implementation.

The system of the present invention further comprises, for an embodiment, a calibration system configured and arranged to calibrate the confinement height and tilt of the first and second surfaces to meet at least an initial calibrated confinement height and parallelism, or tilt, required for providing a predetermined mechanical perturbation, associated to a desired experiment, to a biological sample to be placed within the confinement chamber.

In order to implement the above mentioned closed-loop configuration during the operation of confinement (i.e. not during the calibration operation), for an embodiment, the calibration system just provides the above mentioned initial calibrated confinement height with a given accuracy, in absolute terms, and the above mentioned measuring means, which are not comprised by the calibration system, are those in charge of providing the relative measurements of the confinement height as feedback to the control means to carry out the closed-loop control of the driving means. Both said measuring means and said driving means can be implemented by the above mentioned reversible electromechanical transducer, such as a high precision piezoelectric transducer incorporating its own encoder to know its position relative to its own zero reference, and thus providing a high accuracy by the actuator moving relative to its own reference operated in a closed loop operation.

For an alternative embodiment, a lower precision electromechanical transducer is used (such as a cheaper bulk piezoelectric transducer), and then the calibration system is also involved in the above mentioned closed-loop configuration during the operation of confinement, wherein measuring means comprised by the calibration system provide the relative measurements of the confinement height as feedback to the control means to carry out the closed-loop control of the driving means, i.e. of the lower precision electromechanical transducer.

For an embodiment, said calibration system comprises measuring means for measuring at least the distances between the second surface and the first surface along three parallel lines intersecting each of the planes containing the second and first surfaces at three points, respectively, wherein each set of said three points forms a triangle, such as an equilateral triangle, although any kind of triangle works provided the positions of its defining points are known accurately.

For a further embodiment, the above mentioned calibration is a crude-adjustment calibration, and the calibration system is configured to perform a fine-tuning calibration, for which purpose the measuring means of the calibration system are configured for measuring the distances between the second surface and the first surface along a plurality of further lines intersecting each of the planes containing the second and first surfaces at a plurality of points, respectively, wherein each set of said plurality of points is contained in a surface located at the centre of each of the above mentioned triangles.

According to an embodiment, the calibration system further comprises the above mentioned driving means configured to move at least one of the first and second surfaces according to the above described rotational movements and approaching/distancing direction displacement, and is configured and arranged to control those driving means, by means of the above mentioned or other control means, in a closed- or open- loop configuration, to adjust the confinement heights at, at least, each of the above mentioned three points to a desired and calibrated heights, whether to achieve parallelism or a desired tilt.

For an alternative embodiment, the calibration system comprises its own calibration driving means, which are also configured and arranged to move at least one of the first and second surfaces according to the above described rotational movements and approaching/distancing direction displacement, and is configured and arranged to control those driving means, by means of the above mentioned or other control means, in a closed- or open- loop configuration, to adjust the confinement heights at, at least, each of the above mentioned three points to a desired and calibrated height, whether to achieve parallelism or a desired tilt.

For a variant of any of those embodiments, in addition to those three points, the calibration system is configured to extrapolate the confinement height also for points of the first and second surfaces other than those three points, and thus the confinement height for those other points can also be adjusted to a desired and calibrated height.

According to some implementations of said embodiment, the first and second surfaces are defined by respective first and second walls, wherein at least one of said first and second walls is transparent to light within at least a certain wavelength range (which can be the same as or different to the above named predetermined wavelength range), and wherein the calibration system implements a low-coherence interferometry technique, wherein the measuring means of the calibration system comprises the above mentioned or other non-contact optical measuring means which comprises:
- at least one light emitting arrangement for splitting and directing at least one light beam of low temporal coherence light, within said certain wavelength range, to impinge on:
   - each of the three points of one of the first and second surfaces, traverse the wall defining the same, and then impinge on each of the three points of the other of the first and second surfaces; and
   - a reference reflective surface;
- at least one photo-detector configured and arranged to receive collected interferometric light signals formed by the combination of light reflected from each of said three different points of each of the first and second surfaces, and light reflected from said reference reflective surface; and;
- processing means operatively connected to said at least one photo-detector and configured to process data coming therefrom representative of said collected interferometric light signals, to find the values of the distances between the second surface and the first surface along said three parallel lines.

For one of said implementations, called herein time-domain implementation, the calibration system implements the low-coherence interferometry technique in the time-domain, wherein the reference reflective surface is movable along the optical path of the split light beam impinging thereon, over a distance in which interference happens, and the at least one light emitting arrangement comprises:
- a high-spatial coherence light source (such as a superluminescent diode (SLD)) and an optical arrangement configured and arranged to divide a light beam emitted from said high-spatial coherence light source into at least three high-spatial coherence light beams, constituting said at least one light beam of low temporal coherence light, and to direct each of them to impinge on two corresponding opposite points of the first and second surfaces; or
- a low-spatial coherence light source (such as a LED (Light-Emitting Diode)) and an optical arrangement configured and arranged to convert a light beam emitted from said low-spatial coherence light source into at least three high-spatial coherence light beams, constituting said at least one light beam of low temporal coherence light, and to direct each of them to impinge on two corresponding opposite points of the first and second surfaces.

For another of said implementations, called herein frequency-domain implementation, the calibration system implements the low-coherence interferometry technique in the frequency-domain, according to a one-axis configuration where the above mentioned reference reflective surface is either of the first or the second surface, and wherein the at least one light emitting arrangement comprises:
- a high-spatial coherence light source (such as a superluminescent diode (SLD)) and an optical arrangement configured and arranged to divide a light beam emitted from said high-spatial coherence light source into at least three high-spatial coherence light beams, constituting said at least one light beam of low temporal coherence light, and to direct each of them to impinge on two corresponding opposite points of the first and second surfaces; or
- a low-spatial coherence light source (such as a LED (Light-Emitting Diode)) and an optical arrangement configured and arranged to convert a light beam emitted from said low-spatial coherence light source into at least three high-spatial coherence light beams, constituting said at least one light beam of low temporal coherence light, and to direct each of them to impinge on two corresponding opposite points of the first and second surfaces.

For a variant of the frequency-domain implementation, the at least one photodetector and at least part of the processing means are implemented in a spectrophotometer configured and arranged to receive three collected interferometric light signals simultaneously, and to demodulate their modulated spectrum to decode the distances between each two corresponding opposite points of the first and second surfaces.

For a manner of carrying out said variant, the system of the present invention further comprises three beam splitting lenses each configured and arranged to collect one of said three interferometric light signals and to provide the same to the spectrophotometer through a common acquisition channel.

For an embodiment of the frequency-domain implementation, the second surface is the above mentioned reference reflective surface, and the first wall defining the first surface is an end wall of a rod which is also transparent to light within said certain wavelength range and which is configured and arranged to be longitudinally traversed by:
- the three high-spatial coherence light beams, so that each impinge on two corresponding opposite points of the first and second surfaces; and
- the three interferometric light signals resulting from the light reflected by the first and second surfaces.

In a posterior section of this document, more detailed implementations of the above mentioned time-domain and frequency-domain variants will be described.

A further aspect of the present invention relates to a method comprising using the system of the present invention to perform the above described actions implemented thereby, by means of corresponding method steps.

A still further aspect of the present invention relates to a computer program including code instructions that when executed on one or more processors implement the steps of the method of the present invention.

An independent aspect of the present invention refers to a further calibration system differing from that described in the present document, for all its embodiments, only in that is not applied to the system of the present invention, i.e. is not applied to calibrate the confinement height and tilt of first and second surfaces of a system for providing mechanical perturbations to a biological sample.

Instead, that further calibration system is applied to calibrate, or just measure and/or adjust, the height/distance between first and second surfaces arranged opposite to each other, and the tilt thereof, for any application, specifically for any metrology application, such as those needed in different manufacturing processes involving accurate parallelism measurements, for example those called highly-parallel manufacturing (HPM) processes, or such as those needed for detection purposes, for example to detect the parallelism of surfaces of a glass wedge.

The system of the present invention constitutes, for some embodiments, a high-precision spatiotemporal confining/stretching/shearing (CSS) system for, among other bio-applications:
- Single organelle CSS (e.g. isolated nucleus)
- Single cell CSS
- Cell monolayer CSS
- Multiple cell layer/Cell Aggregate CSS
- Organoid CSS
- Tissue section CSS
- Embryo/organism CSS
- Whole organism CSS (e.g. C.elegans)
- Biomimetic interfaces (e.g. single protein and lipid bilayer-cell interactions)

Indeed, all the above mentioned bio-applications are possible for different embodiments and implementations of the system of the present invention, for which a spatiotemporal controlled micro-confiner is provided, based on two glass slides (or equivalent elements) which allow to confine, stretch and shear biological samples such as cellular organelles (<10 µm), cells (20 µm), tissues (20 µm-1 mm) or full organism (< 5 mm), and which, in contrast to previously developed static micro-confinement tools (e.g.: 4Dcell) that have been implemented via PDMS surface micro-structuring, the system developed here includes preferably an optics-based module (calibration system) for the plane parallel adjustment of glass-based confinement plates at highest accuracy (<0.01°).

Therefore, this invention offers distance-controlled minimally invasive culture conditions circumventing cell death under micro-confinement pillars as typically present in conventional assays and maximizes accessible sample area. It offers highest spatio-temporal flexibility (i.e. allows for choosing any discrete or time-controlled distance of confinement), for example, using modular symmetric substrates and 3D fluid modifications. This is e.g. relevant for mimicking dynamic in vivo conditions (usage of two glass slides with various adhesive coating, micro-patterned substrates, 3D collagen or ECM matrix filling of confinement volumes or fluid exchange via integration of a microfluidics system).

The arrangement of the two glass slides (or equivalent elements) in combination with, for example, a versatile temperature-controlled base plate (in case heating means are included) and a piezo-driven stamp still is compatible with current state-of-the-art microscopy imaging methods and super-resolution platforms. The configuration provides the advantage that the two plane parallel glass slides can be driven by piezo elements resulting in spatiotemporal precisions in the range of 1 nm at 1 millisecond, which can further be coordinated with the imaging protocol. Importantly, piezo-driven mechanical actuators for a culture device will for the first time offer defined spatio-temporal control and high-resolution imaging of mechanical cell/tissue/organism perturbation to understand physiology (e.g.: mechanical tissue stress, oscillatory tissue stretching, changing tissue microenvironments experienced during active cell behavior). Although living matter has mainly evolved in 3D, classical "2D-glass-slide" microscopy and "2D-glass-slide" cell culturing methods have dominated the current understanding about cells and tissue until now. However, in recent years it became clear that physical deformation and mechanical loads on cells can completely change single cell, collective cell and tissue behavior. Furthermore, cell stretching or confinement can lead to alternative differentiation steps and can switch cells from non-motile to motile cells as observed during cancer metastasis.

Altogether the high spatio-temporal precision and flexibility of the system of the present invention, for any of its embodiments, will be of broad interest in the life sciences as a tool to mimic the micro-environment of cells and tissue.

### BRIEF DESCRIPTION OF THE FIGURES

In the following some preferred embodiments of the invention will be described with reference to the enclosed figures. They are provided only for illustration purposes without however limiting the scope of the invention.
Figure 1 schematically shows, on its right view, part of the apparatus of system of the present invention, for an embodiment, identified therein as DCC (from the terms Dynamic Cell Confiner), and on its left view, a microscope system with a sample location for the DCC system.
Figure 2 schematically shows the two slides of the system of the present invention, for an embodiment, where the two glass plates lie at an initial position H, or confinement height, located in the microscope system, above the microscope objective.
Figure 3 schematically shows the system of the present invention, for an embodiment, for a calibration stage, including both the DCC apparatus and the calibration system, and for a confinement stage, at which only the DCC apparatus is included, in this case once appropriately located in the sample location of a microscope system. A computer is illustrated for implementing the control means in charge of carrying out both the calibration process and the control of the DCC apparatus in use while being in a microscope, i.e. to control at least the confinement height.
Figure 4 also schematically shows the DDC apparatus of the system of the present invention with its main components and functions, for an embodiment, and use on an inverted microscope system. The white blocks belong to the microscope system while the grey blocks belong to the system of the present invention.
Figure 5 schematically shows by means of a perspective view, a top rod and a bottom slide respectively including the first and second surfaces of the DCC apparatus of the system of the present invention, and some indications thereon related to the method implemented by the calibration system of the system of the present invention, for an embodiment, particularly of three parallel lines intersecting the first and second surfaces.
Figure 6 is a schematic top view showing an equilateral triangle of side length *d* formed by the intersection points shown in Figure 5, for any of the first and second surfaces, and some components involved in the measuring process implemented by the calibration system.
Figure 7 schematically shows the DCC apparatus and calibration system of the system of the present invention, for an embodiment for which the calibration system implements a low-coherence interferometry technique in the time-domain.
Figure 8 is a plot showing a photocurrent signal i(z) generated by a photodetector of an optical detection system of the calibration system of Figure 7.
Figure 9 schematically shows a photodetector array of a camera comprised by the detection system (DS) of the calibration system of Figure 7, for an embodiment.
Figure 10 schematically shows a possible signal acquisition and treatment arrangement, for implementing blocks EC (electronic circuit) and DAQ (Data Acquisition) of Figure 7, for an embodiment.
Figure 11 schematically shows an alternative arrangement to that of Figure 10, including a multiplexing stage, for an embodiment.
Figure 12 schematically shows an alternative arrangement to those of Figures 10 and 11, for an embodiment for which, instead of several photodiodes and associated optical and electric/electronic branches, only a single photodiode is used to acquire three light signals through a 3-pinholes mask.
Figure 13 schematically shows the DCC apparatus and calibration system of the system of the present invention, for an embodiment for which the calibration system implements a low-coherence interferometry technique in the frequency-domain, according to a first implementation.
Figure 14 schematically shows the DCC apparatus and calibration system of the system of the present invention, for an embodiment for which the calibration system also implements a low-coherence interferometry technique in the frequency-domain, but according to a second implementation different to that of Figure 13.
Figure 15 schematically shows actuators A1 and A2 of the driving means of the system of the present invention, to control the angles ϕ and θ, respectively, of the rotational movements about two respective orthogonal rotary axes of the first and second surfaces defined by a rod and a slide, respectively, of the DCC apparatus, for an embodiment.

### DESCRIPTION OF THE PREFERRED EMBODIMENTS

In the present section some working embodiments of the present invention will be described with reference to the Figures.

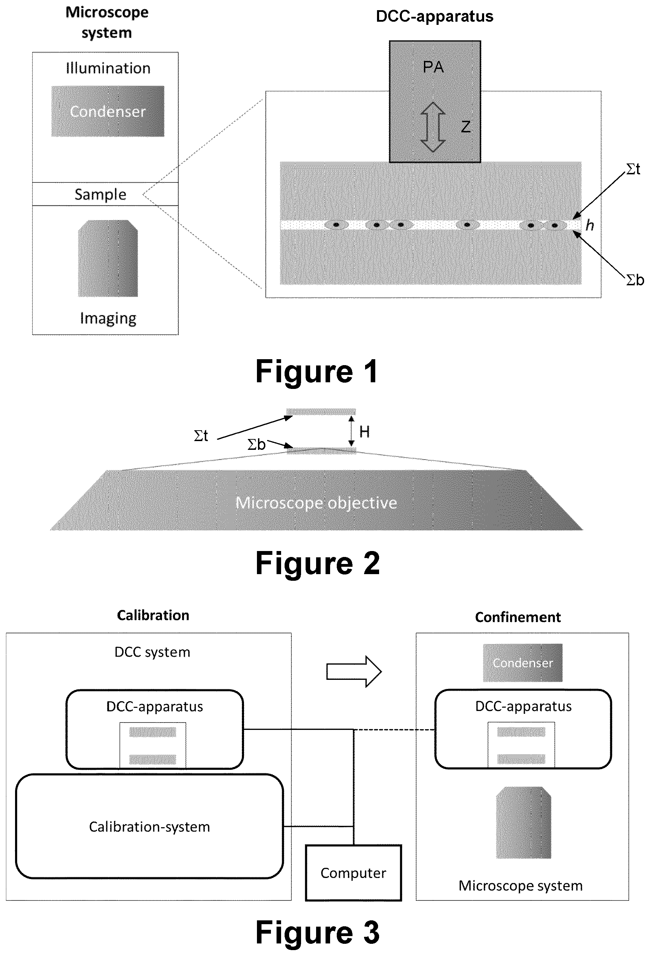

Specifically, Figure 1 schematically shows the main features of the DCC apparatus of the system of the present invention, for an embodiment, which comprises:
- a top glass plate/slide defining a first surface Σt and a bottom plate/slide defining a second surface Σb arranged opposite to each other to define between them a confining chamber with a confinement height h, to confine a biological sample (cells, in the Figure), wherein the top and bottom plates/slides are relatively movable with each other according to an approaching/distancing direction, for confinement/stretching the cells; and
- spacing means configured and arranged to vary the confinement height h, comprise driving means comprising, for the illustrated embodiment, a piezoelectric actuator operatively connected to the top plate/slide to move the same according to the approaching/distancing direction, and which comprises:
   - measuring means configured and arranged to measure at least part of the confinement height h; and
   - control means (not shown in Figure 1) operatively connected to the measuring means and to the driving means, wherein the control means are configured to control the driving means based on the measurements obtained with the measuring means.

Basically, the vertical position of the top glass plate is controlled by the piezoelectric actuator PA (or another kind of electromechanical transducer) so that mechanical perturbation (deformation, confinement, stretch) can be controlled with high precision in time and(or) space. The extension to a shearing constraint (also of interest to biological studies) requires an additional piezoelectric actuator, not shown in the figure, but comprised by the DCC apparatus for another embodiment.

As explained in a previous section, depending on the embodiment, the measuring means comprise the same piezo electric transducer used as an actuator, but using the same as a sensor, although alternatively or complementarily other kind of measuring elements can be comprised by the measuring means.

### Requirements and challenges:

Several requirements are met by the system of the present invention, which indeed have not been trivial to meet.

First, a major requirement is to have an extremely high degree of parallelism (or desired tilt) between the top and bottom glass surfaces of the confining chamber. A variation in height h would result in a non-uniform confinement biasing the experiments. Moreover, at extreme confinement - where the height is as low as a few micrometres, the top and bottom glass plates of the confinement chamber could easily collide. The uncertainty on h sought after is typically lower than 1 µm corresponding to an angular precision lower than 0.01° for a chamber in the order of a few millimetres in diameter.

The unavoidable inaccuracies in the mechanical design and assembly yield uncertainties in the position of these two glass plates. Adjusting them to be plane parallel so as to comply with those requirement is not trivial. Moreover, since the confining chamber is made of disposable elements (suffering from inaccuracies in their geometry) such an adjustment must in principle be performed prior to each new experiment.

Second, one must be able to measure h with sub-micrometric absolute accuracy, at least lower than 0.5 µm. Much higher relative accuracy (which allows determining the accuracy of the displacement relative to an initial position), better than 1 nm, is provided by the piezoelectric transducer of the driving means of the DCC apparatus of the system of the present invention, and also with alternative electromechanical transducers, thus allowing for accurate variations of h during an experiment.

To have a safe practical margin with respect to mechanical conflicts, the two glass plates lie at an initial position H, for example in the order of 100-200 µm, as shown in Figure 2, which is achieved by the calibration process implemented by the calibration system. For an experimental prototype carried out by the present inventors, in the calibration process, the top glass slide is placed by mechanical design at some 500 µm above the bottom glass slide. Then the piezoelectric actuator PA is controlled to move the top glass slide downwards slowly until the interface is detectable, which happens at a distance of around 250 µm for that prototype. Then, the initial position is chosen to be e.g. 100 µm and this height accurately calibrated, and thus constituting the initial confinement height H. This distance H is taken as a reference for the piezoelectric actuator PA which can then move from there with high accuracy and reproducibility. First the piezoelectric actuator PA is controlled to move the top glass slide a few mm upwards to allow easy insertion of the sample, and then to move the top glass slide to the desired position of confinement (or to follow a predefined spatiotemporal trajectory or go to a series of heights, etc.). Thus, by the accurate control of the piezoelectric actuator PA (generally by software) no "end-of-stroke" is reached which could make the top and bottom glass plates collide, and a safety distance between them is guaranteed.

One must also comply with other important technical and practical requirements. As stated above, the two glass plates must be free of any physical contact, which does not allow placing them in contact e.g. with a loose fixture to find a zero reference and(or) set them parallel.

In addition, the above mentioned calibration process must take place when the two confining surfaces are present. Indeed, it would be impossible to measure accurately enough the position and orientation of the top glass surface through the bottom glass plate (glass slide) while complying with the required specifications. For instance, it would be impossible to use a Mirau objective to monitor parallelism through a glass slide. Attempting to measure the slope of the top surface with a confocal system as an alternative would not allow the use of high NA objectives yielding insufficient accuracy. It would also be very impractical, among others because high resolution measurement with a confocal system requires water or oil immersion.

Moreover, a sequential method in which the measurement is first carried out without the bottom glass plate (positioning the later with the piezo in the focal plane), and inserting the bottom glass plate in a second step (after moving up the top glass surface), would be impractical and would lack accuracy. The uncertainties for the positions of the two surfaces sum up. Therefore, to obtain a practically viable solution, there is an implicit requirement to perform calibration of parallelism and distance with both the bottom and glass plates in place.

As will be described below, the calibration system of the present invention provides a high absolute accuracy, better than 50 nm and even sub-nanometric, to provide the above mentioned initial position H of the two glass plates (or equivalent elements, such as a slides or a rod).

The present invention indeed constitutes a technical solution allowing compliance with the above challenging specifications and requirements, by the inclusion of both the above described DCC apparatus and a calibration system, which will be described with more detail in the following.

### System and configurations:

The system of the present invention, as mentioned above, comprises two subsystems, namely the DCC apparatus and a calibration system, described below. Both subsystems are controlled by the control means, implemented for example by means of a computer using Labview interface. In principle, calibration is required each time a new glass confining disposable element is used. Once calibrated the DCC apparatus works as a standalone apparatus that can be used on any inverted-microscope system. A schematic of these subsystems and their interrelation is shown in Figure 3.

### DCC apparatus:

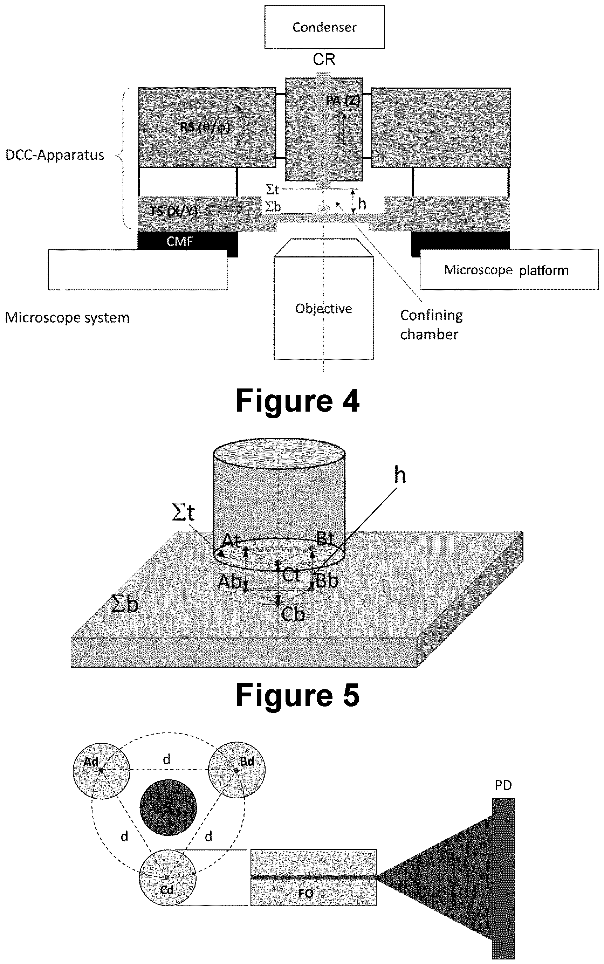

In addition to the description made above with reference to Figure 1, a more detailed description of the DDC apparatus with its main components and functions, and its use on an inverted microscope system, is provided below with reference to Figure 4.

As shown in that figure, the confining chamber is defined by two plane glass surfaces Σb and Σt defined by two respective opposite glass walls. Specifically, for the illustrated embodiment, the bottom surface Σb is defined by the top face of a glass wall constituted by, for example, a standard circular microscope cover slip (of 20 mm diameter in the design implemented by the present inventors), whereas the top surface Σt is defined, for the illustrated embodiment, by a flat bottom end wall of a glass rod CR (for another embodiment, the top surface Σt is defined by the bottom face of a small glass slide (typical diameter of 5 mm), which is glued on a tube or rod of similar diameter made of stainless steel or of other material including glass), which is endowed with several advantages described further below. Both glass walls of the confining chamber are disposable elements and, in principle, changed for each new experiment.

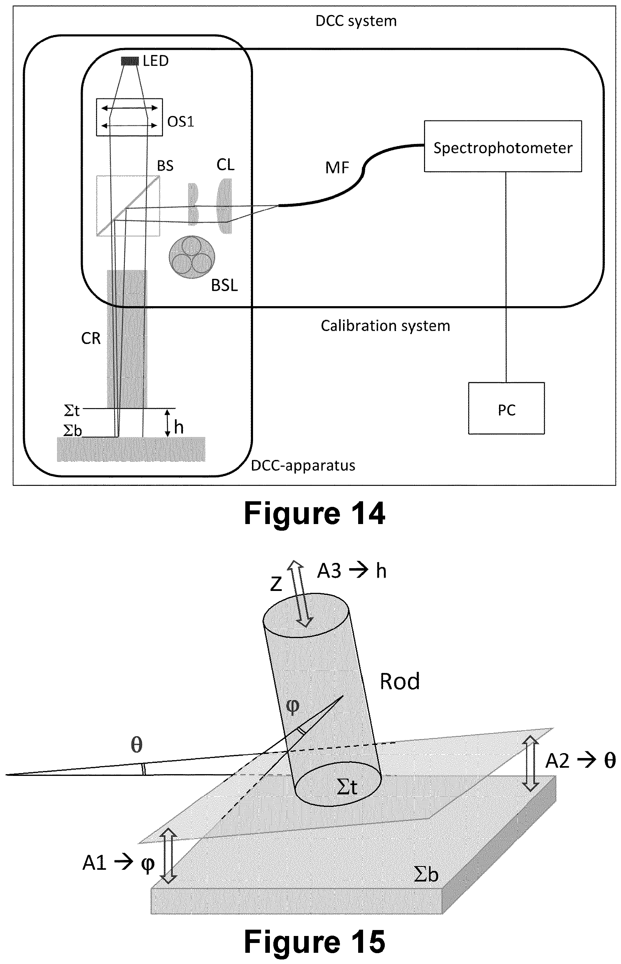

A piezo electric actuator PA allows moving the rod along Z direction, so as to control the height h of the confining chamber with nanometric accuracy. Because of the imprecisions of the mechanical pieces (including the rod) and their assembly, the parallelism between Σb and Σt must be adjusted to a very high angular accuracy (which depends on the rod diameter, requirement typically < 0.01°) by means of a two-dimensional rotational stage RS allowing to control the angles θ and ϕ defining the plane of surface Σt (see Fig. 15). As explained above, the high angular precision required on θ and ϕ is not trivial to measure and control. The calibration system described below serves this purpose, as well as the accurate measurement of the distance between Σb and Σt.

Figure 15 schematically shows actuators A1 and A2 of the two-dimensional rotational stage RS, to control the angles ϕ and θ, respectively, of the rotational movements about two respective orthogonal rotary axes of the first Σt and second Σb surfaces defined by a rod and a slide, respectively, of the DCC apparatus, for an embodiment. In this case, the actuator A1 and A2 are configured to rotate the rod. An actuator A3 is also schematically illustrated in Figure 15, referring to the one implemented by the above mentioned piezo electric actuator PA to move according to Z direction.

For the embodiment illustrated in Figure 4, the DCC apparatus is temporarily attached to the microscope platform by means of a mechanical piece denoted therein CMF (Confiner to Microscope Fixture) - which may differ depending on the microscope, and is centred near the optical axis of the microscope system with respect to the rod axis. The biological sample sits on the bottom glass which can be moved to position the cells on the X and Y axis with by means of a custom manual translation stage TS.

As stated above, the glass rod is a specific component of the DCC apparatus, for the illustrated embodiment, although alternatives are also envisaged. The glass rod CR is endowed with the following advantageous features:
▪ Practical to manipulate as a disposable element (positioning, coating etc.).
▪ Accurate positioning in a V-groove and steady attachment without need for gluing etc.
▪ Full biological compatibility (only glass material in contact with biological solution, no surrounding fixture).
▪ Allows for top illumination with microscope light condenser or custom LED system
▪ Flexible size of the confining surface using rods of different diameter.

### Calibration system:

For the embodiments described in the present section, the calibration system of the system of the present invention is or comprises a metrological system based on low coherence interferometry, which allows measuring both the distance h, i.e. the confinement height, and tilt between the bottom surface Σb and the top surface Σt of the confining chamber.

The calibration system implements a method consisting in measuring the distance between the bottom surface Σb and the top surface Σt along three parallel lines intersecting each planes defining Σb and Σt at three points Ab, Bb, Cb, and At, Bt, Ct, respectively, as shown in Figure 5.

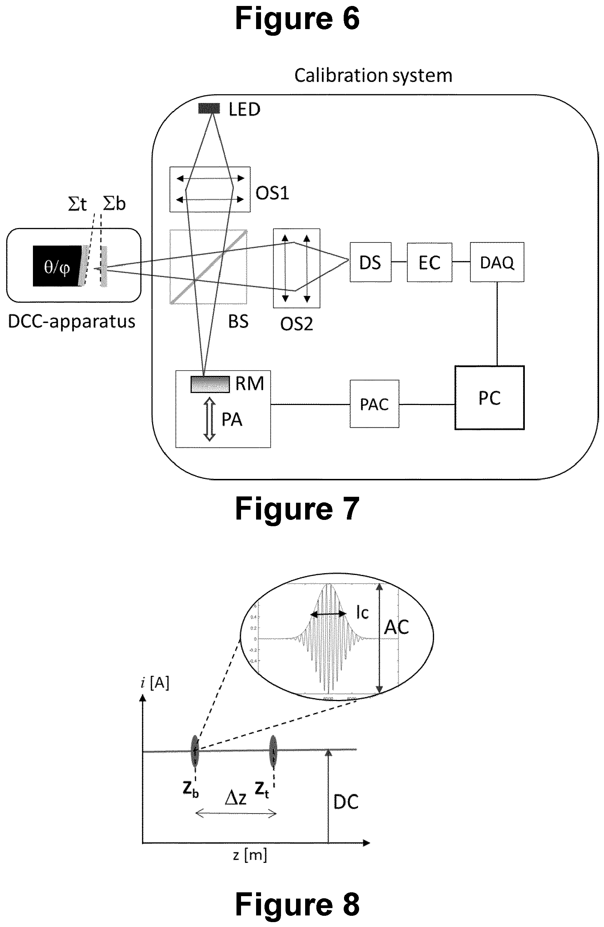

Each set of three points forms, for the illustrated embodiment, an equilateral triangle of side length d, as shown in Figure 6, although any kind of triangle works provided the positions of its defining points are known accurately. In Figure 6, references Ad, Bd, Cd have been used to refer indistinctly to any of the two sets of threes points Ab, Bb, Cb, and At, Bt, Ct.

In a first instance, the calibration system measures the distances z1 = Ab-At, z2 = Bb-Bt, and z3 = Cb-Ct with a micrometric accuracy. Thus, by adjusting these three distances, the bottom Σb and top Σt glass surfaces of the confiner can be set plane parallel, and the average distance known to a relatively high precision (estimated to be better than +/- 50 nm, yielding an angular accuracy better than +/- 0.01° in the present case).

For very high accuracy on parallelism and distance, an additional fine-tuning calibration is to be performed, for some embodiments (for other embodiments, no additional fine-tuning is needed, as will be described below). Such fine-tuning requires a surface of measurement S - corresponding to a multitude of measurement points forming a single measurement channel. The latter is located in the centre of the equilateral triangle formed by the points A, B, and C, as shown in Figure 6. The distance h between the two confining surfaces Σb and Σt is then measured precisely (estimated to be better than +/- 50 nm).

Note that the here described calibration method allows directly measuring the tilt of Σb relative to Σb, and is thus independent of any inaccuracies in perpendicularity of the optical axis of the calibration system relative to these surfaces. Moreover, optical paths in the reference and sample arm are the same independent of misalignments in the design of the calibration system of the present invention, making it extremely robust to optical aberrations.

In the following, three different implementations of the calibration system will be described, including their respective working principles, particularly a time-domain implementation and first and a second frequency-domain implementations.

### - Time-domain implementation:

The heart of the present implementation of the calibration system consists of a free space beam-splitting interferometer with an implementation similar to a so-called Linnik configuration, as shown in Figure 7. The reference arm incorporates a plane mirror RM mounted on a piezo-electric actuator PA to me moved according to the direction indicated by an up down arrow in the Figure. The DCC apparatus is located in the sample arm, with its glass confining surfaces Σb and Σt perpendicular to the optical axis of that sample arm, and transparent to the wavelength of the light emitted by the light source, in this case a LED. An optical system OS1 collects light from the LED and illuminates the sample and reference via a beam-splitter BS with the same intensity and distribution.

A LED is a broadband spatially incoherent light source. With a carefully designed optical system it can behave as a multitude of broadband spatially coherent sources, each of them corresponding to a broadband laser. Each coherent laser channel formed by said kind of broadband spatially coherent sources can be used to perform low temporal coherence interferometry to measure the distance between interfaces of different refractive indexes (like air/glass and water/glass). Indeed, when the reference mirror RM is moved along its optical axis, light reflected from the two arms recombine and interfere in the detection arm. Generally, a 3-dimensional interference pattern is obtained. With a small detection area (see below) an interference correlogram in the longitudinal dimension (z) is obtained within the source coherence length (Ic). The latter is inversely proportional to the spectral bandwidth of the light source, according to a Fourier transform relationship. Thus, the broader the spectrum the shorter is Ic and the better the resolution. Moving the reference mirror RM along z over a distance in which interference happens, the correlogram measured with a photodetector corresponds to a sinusoidal photocurrent signal i(z) modulated by a Gaussian-like envelope (with a Gaussian-like spectrum - as provided by the LED).

The typical photocurrent signal i(z) acquired for two glass interfaces is shown in Figure 8. The peak of each correlogram corresponds to the position of a glass interface, i.e. of Σb and Σt. Thus, precisely moving the reference mirror RM with the piezo-electric actuator PA and detecting the peaks of the correlograms allow precisely measuring the distance Δz between transparent interfaces Σb and Σt, with a measurement accuracy better than 50 nm, or even sub-nanometric by using, for example, methods based on the phase analysis of the Fourier transform of the correlogram, such as that disclosed by Peter de Groot & Leslie Deck (1995), "Surface Profiling by Analysis of Whitelight Interferograms in the Spatial Frequency Domain", Journal of Modern Optics, 42:2, 389-401. The accuracy depends on the measurement range.

The size of a detection channel provided by the LED and the optical system roughly corresponds to the size of an airy disc in the detection arm. Thus, each detector must approximately match the size of an airy disc so that a relatively low amount of light is collected (in the order of 1 nW).

As explained above, three measurement points are used to determine and adjust the orientation of the plane Σt relative to Σb. Practically, it is not trivial to have three photodetectors at the distance d from each other (of, for example, around 2 mm). Moreover, these photodetectors must be of size in the order of an airy disc defined by the optical imaging system OS2 (of, for example, around 5 µm). To fulfil those requirements, the present inventors propose to use three monomode optical fibres FO to collect light from close locations in the detection plane (see Figure 6 showing one of those monomode optical fibres FO). Guided light can be collected at the other ends, where there is all necessary space for "pigtailed" photodetectors PD (one of which is shown in Figure 6) and electronic circuitry. This detection system DS and associated electronic circuit EC are shown in Figure 7, which also shows a data acquisition DAQ stage and a programmable automation controller PAC, both operatively connected to a controller/computer PC in charge of performing the processing and control tasks involved by the calibration process.

For fine-tuning measurements (see above) a glass or plastic rod (for example, of diameter in the order of 1 mm) can be used to guide light coming from the surface of measurement S (see Figure 6) to another single photodetector collecting light at the exit.

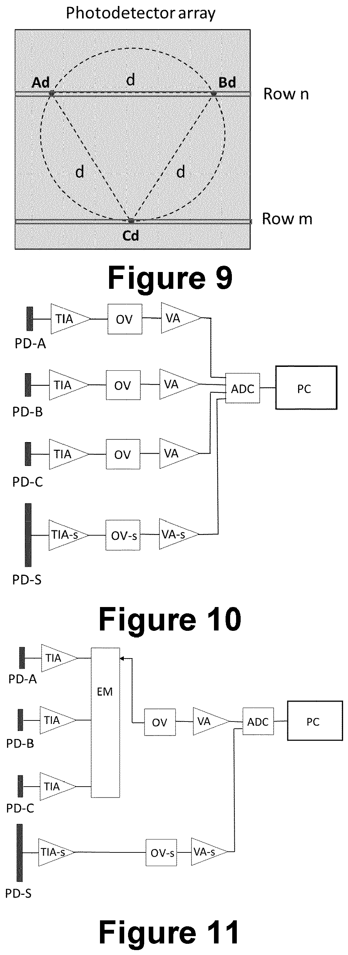

Alternatively, a camera can be used instead of the optical detection system described above. A pixel of its array of photodetectors is in the order of size of a detector channel. Moreover, a camera is readily endowed with the electronic circuitry necessary to exploit the signals. However, there are several downsides namely the acquisition speed (not ideal to have a slow response when tuning a signal), the limited dynamic range (due to the impossibility to suppress the DC signal, see further explanations below) and the higher cost. The present implementation of the calibration system only needs to measure the incoming interferometric light signals on three pixels (for standard accuracy, i.e. without the fine-tuning measurements). With a camera allowing for specific zone acquisition (usually given pair of lines), the acquisition speed can be greatly improved. For instance, for standard accuracy it is needed to read no more than three pixels, which corresponds to only two pairs of lines if the camera is optimally positioned, as shown in Figure 9 where those pairs of lines are referred as Row n and Row m, and the camera referred as photodetector array. Given its flexibility and ideal characteristics, a camera has been used by the present inventors in a developmental phase.

### First variant of signal acquisition and treatment, for the time-domain implementation:

The photocurrent i(z) generated by a photodetector of the optical detection system (e.g. PD-A) of the time-domain implementation of the calibration system, for two glass interfaces, i.e. that shown in Figure 8, contains an alternating and a constant signal, i.e. an AC and a DC component, respectively. It must be amplified to match at best the operational range of the used analogue to digital converter ADC.

As shown in Figure 10, for an embodiment, a transimpedance amplifier TIA - converting the photocurrent into a voltage, is followed by an offset voltage OV to cancel out the DC component (not conveying any information and wasting the DR of the ADC). Note that this last operation is not possible in a camera. A voltage amplification stage VA is implemented before the analogue to digital converter ADC.

Since the power collected in the single detection channel is low, carefully designed TIA with low noise electronics is required. In a different embodiment, to decrease the number of electronic components (at the expense of complexity), an electronic multiplexer EM can be used after the TIA stage for the single detection channels, as depicted in Figure 11.

The digitized signal is treated with an appropriate software, such as the Labview software. At first, noise on the correlogram is reduced with digital high-pass and lowpass filters, and the residual DC component is fully suppressed leaving only the AC component of the signal. Then the envelope of the correlogram is reconstructed using a so-called Hilbert transform- a mathematical tool which rectifies a signal (inverts the negative component of the signal) and calculates its envelope.

Signal treatment is performed on the three signals corresponding to the three correlograms measured by the photodiodes PD-A, PD-B and PD-C. The peaks of the envelopes is extrapolated and the phase difference between these three signals is determined. This allows finding the distances z1, z2, and z3 with a high degree of precision. Higher accuracy can obtained by extrapolating the phase difference between these signals by using, for example, methods based on the phase analysis of the Fourier transform of the correlogram, such as that disclosed by Peter de Groot & Leslie Deck (1995), "Surface Profiling by Analysis of Whitelight Interferograms in the Spatial Frequency Domain", Journal of Modern Optics, 42:2, 389-401. Should such a procedure be successful the fine-tuning procedure could even be avoided.

Depending on the level of performance required and on the level of automation desired, different configurations can be provided regarding manually adjusting the tilt angles ϕ and θ using the micrometric screws of the piezos controlling the DCC apparatus (i.e. according to an open-loop configuration), or introducing a self-calibrating system (i.e. according to a closed-loop configuration). For a fully automated calibration, two bulk piezoelectric actuators are controlled by control means, for example implemented by Labview, in a feedback loop and adjust the tilt and distance h in few seconds directly providing a "ready to use" system.

In the case of manual adjustment, the user manually strives to get equal values for z1, z2 and z3 while the reference mirror RM scanner is continuously scanned back and forth. Labview (for example) is used to calculate a figure corresponding to the minimal differences between these values. From the user's perspective, this figure is displayed in the Labview interface as a gauge whose level has to be maximized by adjusting the micrometric screws. If fine tuning is necessary, the channel PD-S containing a multitude of spatially coherent channels is also used. The resulting signal is a single correlogram whose amplitude strongly depends on the tilt angle. The user maximizes the amplitude of the envelope of the correlogram - displayed as a gauge in the Labview interface, by performing a finer adjustment with same micrometric screws. The corresponding distance h obtained is also directly displayed.

Note that the fine-tuning operation to minimize the tilt rests on a different mechanism than for finding the distances z1, z2 and z3. Instead of minimizing the differences between these three distances, as mentioned above, the amplitude of the signal is maximized, which corresponds to minimizing the phase difference between all the correlograms detected. Indeed, the signal is maximal when all correlograms are in phase. This provides a very high angular accuracy (in principle only limited by optical design trade-offs and aberrations), as well as a much stronger signal requiring different gains and bias in the electronic circuit. Since phase differences exceeding π/2 in the various channels would result in cancelling out the signal, a first stage alignment with the three single channels is necessary to be able to start the fine-tuning procedure.

### Second (and simpler) variant of signal acquisition and treatment, for the time-domain implementation:

In the first variant described above, the signals measuring the distances z1, z2 and z3 are acquired and treated separately, which requires three identical parallel electronic circuits as shown in Figures 10 and 11. The acquisition of these three signals with a single photodiode would considerably simplify the device. It is very likely that a specific signal treatment, which we briefly describe below, allows extrapolating the signals so as to obtain parallelism and distance. The fine-tuning operation described earlier might even become obsolete.

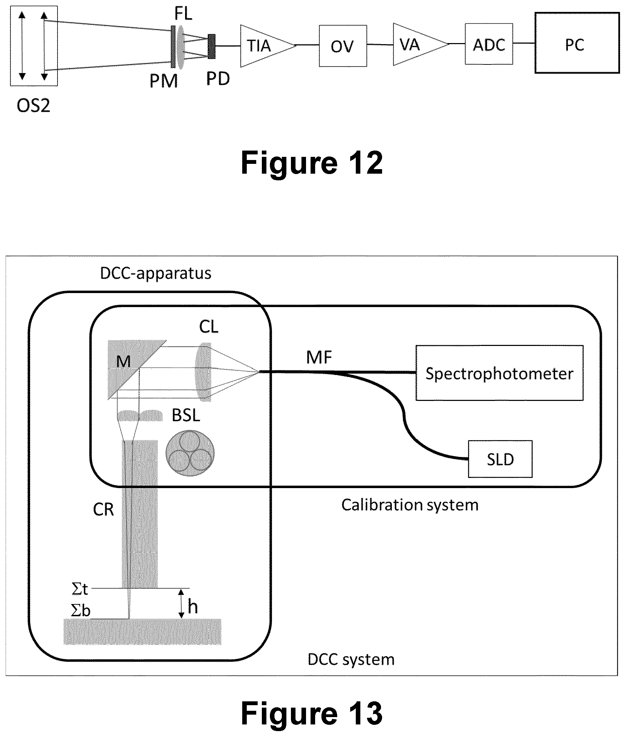

An implementation of this second variant is shown in Figure 12. The same optical imaging system OS2 focuses light on a mask PM endowed with three pinholes of the size of an airy disc (of, for example, a diameter of 5 µm) placed at the corners of an equilateral triangle (same position as for the optic fibres). Such a pinhole mask PM can be realized by means of photolithography on a glass slide with reflective coating. Light traversing these three pinholes is collected by the same photodiode PD. To reduce the size of the latter so as to minimize dark current, a focusing lens FL can be used. The electronic circuit is the same as described above for Figures 10 and 11.

The three correlograms obtained for each surface Σt and Σb must be superimposed. In an initial step, information like the number of peaks, signal width and intensity can be exploited to achieve approximate alignment. In a second step maximizing the cross-correlation between the signal, or minimizing the number of zeroes in the signal might allow for fine-tuned alignment.

### - First frequency-domain implementation:

A first frequency-domain implementation of the calibration system of the present invention is here briefly described with reference to Figure 13, which constitutes an alternative to and provides some advantages with respect to the above described time-domain implementation.

The working principle of the first frequency-domain implementation rests on the method first named "spectral radar" that is extensively used in the so-called "Fourier-domain" or "Spectral-domain" OCT for its superior sensitivity. No scanning of the mirror in the reference arm is necessary to generate the signal. Instead, the distance is encoded in the modulated spectrum which is measured with a carefully designed spectrophotometer. Signal treatment including resampling and Fourier transform allows extrapolating distances.

The present inventors propose a different implementation of this method lending itself well to the present invention. Instead of having a reference mirror in one arm of a classical interferometer configuration, the sample itself (not the biological sample, but the media solution into which the biological sample is placed) acts as an interferometer system in which either the bottom Σb or the top Σt surface of the confining chamber is the reference surface. With this configuration and no moving parts (scanner) needed, a much more compact system near the sample is obtained. This allows performing the calibration from the top, i.e. via the confining rod CR, as shown in Figure 13, being the rod CR transparent to the wavelength of the light emitted by the light source, and also to the wavelength of the light used by the microspore system into which the DCC apparatus will be installed.

To have sufficient power budget, the light source is a superluminescent diode SLD. The latter delivers light to the confining chamber via a monomode fibre MF optically coupled to an optical system incorporated in the DCC-apparatus. This optical system consists of a collimation lens CL, a mirror M and three small beam splitting lenses BSL placed side by side in a circle. Each of these small lenses (diameter of, for example, around 2 mm) focuses a portion of the collimated beam crossing the confining rod CR so as to have a depth of field exceeding the maximal distance Σb-Σt used for calibration (for example, of around 100 µm). Note that, to allow using the microscope condenser for illumination of the sample, a beam splitter must be used instead of the mirror.

Light reflected back at the two surfaces Σb and Σt of the confining chamber is collected by the same three lenses and delivered to the optical fibre via the same optical system. Light coupled to the optical fibre is delivered to a spectrophotometer via a fused optical coupler (acting as a beam splitter). The measurement accuracy is also below 50 nm, and even sub-nanometric as the Fourier transform operation on the modulated spectrum operation already exploits information of the phase delay between the components, for example as described in Antonacci et al., "Double domain wavelength multiplexed Fizeau interferometer with high resolution dynamic sensing and absolute length detection", Optics and Lasers in Engineering 91 (2017) 227-231.

The most costly part of the time-domain implementation, namely the piezo-electric scanner PA for the moving mirror RM in the reference arm (see Figure 7), is no more required.

The possibility to merge the calibration system and the DCC-apparatus into a single and compact assembly/casing/module (as illustrated in Figure 13) and the characteristics thereof brings the following advantages with respect to the time-domain implementation
▪ The gain in compactness and modularity allows having a single system for the operation of confinement and calibration. This allows monitoring the displacement of the piezoelectric transducer during an experiment making the requirement for a sophisticated piezo-electric system with its internal calibration system obsolete. Thus, with position measurement provided with the here described calibration system, a simple and cheap bulk piezo electric component can in principle be used for the confiner yielding a much cheaper system. In other words, the optical measuring means here described, with reference to Figure 13, can be comprised by the measuring means of the spacing means of the DCC apparatus, and thus a cheaper piezoelectric transducer can be used. Note that, thanks to the modularity of the system the same light source and detection module (SLD and spectrophotometer) can be connected to many confiners to perform the operation of calibration. Hence, calibration can be performed via the rod CR during sample measurements.
▪ The higher sensitivity obtained with a spectral radar system combined with a SLD allows measuring the height of the confining chamber while the sample is present (reflection for a glass/water interface detectable). Note that this would also be the case in the time-domain implementation with a SLD or if many modes are used as in the "fine-tuning" operation (but only with the calibration system, not when measuring with biological samples).
▪ A system devoid of moving parts is in principle more robust and reliable.
▪ A system without scanning makes the system much faster (provided a SLD is used), which is better for fine-tuning adjustments, including real-time adjustments, in the parallelism calibration operation.

However, the here described first frequency-domain implementation has also the following disadvantages with respect to the above described time-domain implementation:
▪ Monitoring the confinement height h, which depends on the axial resolution of the system, is more limited. Indeed, available SLDs emit light at a higher wavelength with narrower spectrum (e.g. broadband of 50 nm FWHM at 850 nm) as compared to a well-chosen LED (80 nm FWHM at 600 nm), yielding approximately a factor of four lower axial resolution. This means that when the confinement height h is below a certain value (particularly 8 µm for the experiments performed by the present inventors) the system won't be able to resolve the two walls and then measuring h will not be possible.
▪ The economy of a scanner is compensated by the need for a SLD and a spectrophotometer, which likely increases the cost.
▪ The miniature optical lens system attached to the DCC-apparatus is more complex than the optical system of the previous system.

### - Second frequency-domain implementation:

A second frequency-domain implementation of the calibration system of the present invention is here briefly described with reference to Figure 14, which constitutes an alternative to the above described first frequency-domain implementation, which includes the modifications described below.

In the first frequency-domain implementation, as shown in Figure 13, the same optical path is used for illumination and detection via the three small beam splitting lenses BSL, thanks to a 50/50 fibre optic coupler. Instead, for the here described second frequency-time domain implementation, the present inventors take advantage of the flexibility of the one-axis interferometer geometry to decouple the illumination path from the detection path using a beam splitter BS cube outside of the optical path common to the BSL as shown in Figure 14. This allows using a broadband spectrum spatially incoherent light source (a LED in the illustrated case) to illuminate the sample and provides the following advantages with respect to that of Figure 13:
▪ Much cheaper light source than a superluminescent diode (SLD) to be used with a fibre optic illumination system.
▪ Devoid of potential issues caused by scattering on optical surfaces due to dust etc. (a problem inherent to spatially coherent light sources such lasers or SLDs)
▪ Flexibility to design for a robust system insensitive to unavoidable misalignments of its optical components (tilt, off-axis etc.). The collection of specularly reflected light in a narrow angle (required for long depth of field) requires the accurate superimposition of the illumination and detection axes (in the order of +/- 1° in the present case), what can be difficult to achieve in practice. Decoupling the illumination path from the detection path allows designing for a larger illumination angle than the detection angle so as to obtain insensitivity to inaccurate positioning of the optical components of the system.

The drawbacks of this second frequency-domain implementation with respect to the first frequency-domain implementation are listed hereafter:
▪ The use of a LED instead of a SLD yields a much lower power budget. This is compensated by the high sensitivity of the method and the possibility to use a relatively large integration time (much larger than when scanning in the time-domain). Calculations reveal that the number of photons detected is sufficient for calibration of the confining chamber when empty. However, in presence of a sample, the power budget might be at the limit making more difficult calibration during sample measurement and its associated advantages, although that possibility is not discarded.
▪ As depicted in Figure 14, the light source is incorporated in the DCC apparatus. First, this results in a more cumbersome system, and second, in the necessity to incorporate a source into each DCC apparatus. This downside can be mitigated by using an optic fibre bundle to have the light source on the portable calibration system.
▪ In the implementation of Figure 14, the illumination system obstructs the top illumination provided by the condenser of the microscope. A mitigation solution consists of coupling light from a white LED into the rod with a tilted illumination axis.

Variations to the scheme of Figure 14 are also embraced by the here described second frequency-domain implementation of the calibration system of the present invention, including the following alternatives, with the described below advantages and disadvantages:
▪ Using, instead of a LED, a thermal light source like a halogen lamp or an arc-lamp, which have a much broader spectrum than a LED (and thus offers a better resolution). However, such sources are surprisingly expensive and may provide a lower brightness (key for the power budget) than nowadays LEDs.
▪ An alternative set-up in which a simple photodiode is used instead of a spectrophotometer is possible with either a frequency-modulated laser or a swept source. However, these sources are far more expensive than a spectrophotometer.
▪ The use of a SLD in the illumination path of such a decoupled configuration (free space source like a LED) to improve the power budget is possible. However, this would require the incorporation of another BSL lens with a different design in order to have a design robust to misalignments.
▪ In principle, the power budget could be improved in abandoning the one-axis configuration for a classical configuration with a fibre optic reference arm sealed with a mirror. However, this would require the additional adjustment of the bottom plate of the calibration chamber what would be very impractical. In addition, dispersion would have to be compensated by balancing the reference arm. Thus, a one-axis interferometer configuration is a preferred configuration.

### Signal treatment and exploitation:

In the here described second frequency-domain implementation of the calibration system, three signals containing information from different locations are acquired simultaneously creating modulations in the spectrum, which depend on the distance between the two plates at each location. A Fourier relationship links this distance to the frequency of modulation in the frequency-space. Since the spectrum is recorded by the spectrophotometer in the wavelength-space, resampling is must first take place to obtain the modulation frequency in the frequency-space. After this operation, a Fourier transformation of the resampled signal is realized. Each frequency component corresponds to a distance between the two plates at one of the three locations.

To position the bottom and top (defined by bottom end wall of rod CR) walls of the confining chamber parallel relative to each other, these three Fourier components signals must be superimposed by adjusting the tilt angles with micrometric screws. From the user perspective, for example, a gauge in the display interface has to be maximized. A first adjustment is obtained with this operation. Perfect superimposition of these three signals, which provides perfect parallelism (fine-tuning adjustment), is simply obtained by maximizing the amplitude of the coinciding signals. A display gauge, for example, is again used to provide a feedback to the user.

In summary, the manipulation of a compound signal acquired via a single information channel provides both accurate parallelism and knowledge of the distance *h.*

All of the above described implementations of the calibration system of the present invention (time-domain, first and second frequency-domain) have their pros and cons, but indeed meet their purpose and constitute working embodiments of the calibration system. The selection of one or another to implement the calibration system of the present invention will depend on the design requirements and economical budget for the requested application, but indeed all of them work properly.

To sum up, the system of the present invention has the following main advantages as compared to the prior-art cell confiner systems known in the art:
▪ Flexibility to choose any discrete confinement height *h* with a high precision (better than 1 nm).
▪ Large height of confinement range:
   ∘ When the calibration system is used for measuring *h* during the operation of confinement: 2 µm - 2 mm if the above mentioned LED is used, or 8 µm - 2 mm if a SLD is used;
   ∘ When the calibration system is not used for measuring *h* during the operation of confinement, but only to measure the initial confinement height *H,* i.e. to find a zero reference, *h* can be measured down to a few (at least 15) nanometres (this limit only depends on the accuracy on tilt) and also up to 2 mm.
▪ No special glass slide microfabrication tools needed.
▪ Possibility to generate any trajectories (ramps, saw-tooth, sine etc.) with the piezoelectric actuator to dynamically vary *h* at either fast (<1000 µm/s) or slow (>1 µm/h) time scales.
▪ DOWN (confinement) and UP (stretch) measurements are possible.
▪ Angular control of the top glass slide.
▪ Possibility to implement lateral (shear) stress.
▪ Possibility to control the angle of the top glass interface providing a gradient of heights.
▪ Free of pillars to control *h,* which prevents smashing some of the cells. This allows avoiding death-signalling molecular transmitters (lysis) potentially biasing the experiment, and maximizing the useable sample area.
▪ Practical benefits: easier use, faster preparation time and noiseless (no air vacuum system).

A person skilled in the art could introduce changes and modifications in the embodiments described without departing from the scope of the invention as it is defined in the attached claims.

## Claims

1. A system for providing mechanical perturbations to a biological sample, comprising an apparatus which comprises:
- first (Σt) and second (Σb) surfaces arranged opposite to each other to define between them a confining chamber with a confinement height (h), to confine a biological sample, wherein said first (Σt) and second (Σb) surfaces are relatively movable with each other according to an approaching/distancing direction; and
- spacing means configured and arranged to vary said confinement height (h), wherein said spacing means comprise driving means operatively connected to at least one of said first (Σt) and second (Σb) surfaces to move the same according to said approaching/distancing direction;
**characterized in that** said spacing means further comprise:
- measuring means configured and arranged to measure at least part of said confinement height (h); and
- control means operatively connected to said measuring means and to said driving means, wherein said control means are configured to control the driving means based on the measurements obtained with the measuring means.

2. The system according to claim 1, wherein said driving means comprise at least one electromechanical transducer attached to one of the first (Σt) and second (Σb) surfaces to move the same according to at least said approaching/distancing direction, when receiving a control electrical signal from the control means.

3. The system according to claim 2, wherein said at least one electromechanical transducer is a reversible electromechanical transducer, and wherein the measuring means comprise said at least one reversible electromechanical transducer to perform said measurement of at least part of the confinement height (h).

4. The system according to claim 1 or 2, wherein the first (Σt) and second (Σb) surfaces are defined by respective first and second walls, wherein at least one of said first and second walls are transparent to light within at least a predetermined wavelength range, and wherein said measuring means are non-contact optical measuring means configured and arranged to measure said confinement height (h) by performing measurements of light within said predetermined wavelength range and coming from at least one of the first and second walls.

5. The system according to any of the previous claims, wherein said spacing means and said confining chamber are free from any spacer element placed between the first (Σt) and second (Σb) surfaces.

6. The system according to any of the previous claims, wherein the first (Σt) and second (Σb) surfaces are also relatively movable with each other according to two rotational movements about at least two respective orthogonal rotary axes, both orthogonal to said approaching/distancing direction, and wherein said driving means are configured to move at least one of the first (Σt) and second (Σb) surfaces also according to said rotational movements, under the control of said control means, to achieve an accurate parallelism or a desired tilt between the first (Σt) and second (Σb) surfaces.

7. The system according to any of the previous claims, wherein said control means are configured to control the driving means to make the same move the at least one of the first (Σt) and second (Σb) surfaces according to any of a plurality of trajectories along said approaching/distancing direction and/or along said rotational movements, wherein each of said plurality of trajectories is variable along time.

8. The system according to any of the previous claims, further comprising a calibration system configured and arranged to calibrate the confinement height (h) and tilt of the first (Σt) and second (Σb) surfaces to meet at least an initial calibrated confinement height (H) and parallelism, or tilt, required for providing a predetermined mechanical perturbation, associated to a desired experiment, to a biological sample to be placed within the confinement chamber.

9. The system according to claim 8, wherein said calibration system comprises measuring means for measuring at least the distances (z1, z2, z3) between the second surface (Σb) and the first surface (Σt) along three parallel lines intersecting each of the planes containing the second (Σb) and first (Σt) surfaces at three points (Ab, Bb, Cb; At, Bt, Ct), respectively, wherein each set of said three points (Ab, Bb, Cb; At, Bt, Ct) forms a triangle.

10. The system according to claim 9, wherein the first (Σt) and second (Σb) surfaces are defined by respective first and second walls, wherein at least one of said first and second walls is transparent to light within at least a certain wavelength range, and wherein the calibration system implements a low-coherence interferometry technique, wherein said measuring means of the calibration system comprises said or other non-contact optical measuring means which comprises:
- at least one light emitting arrangement for splitting and directing at least one light beam of low temporal coherence light, within said certain wavelength range, to impinge on:
- each of the three points (At, Bt, Ct; Ab, Bb, Cb) of one of the first (Σt) and second (Σb) surfaces, traverse the wall defining the same, and then impinge on each of the three points (Ab, Bb, Cb; At, Bt, Ct) of the other of the first (Σt) and second (Σb) surfaces; and
- a reference reflective surface;
- at least one photo-detector configured and arranged to receive collected interferometric light signals formed by the combination of light reflected from each of said three different points (At, Bt, Ct; Ab, Bb, Cb) of each of the first (Σt) and second (Σb) surfaces, and light reflected from said reference reflective surface; and;
- processing means operatively connected to said at least one photo-detector and configured to process data coming therefrom representative of said collected interferometric light signals, to find the values of the distances (z1, z2, z3) between the second surface (Σb) and the first surface (Σt) along said three parallel lines.

11. The system according to claim 10, wherein the calibration system implements said low-coherence interferometry technique in the time-domain, wherein said reference reflective surface (RM) is movable along the optical path of the split light beam impinging thereon, over a distance in which interference happens, and said at least one light emitting arrangement comprises:
- a high-spatial coherence light source and an optical arrangement configured and arranged to divide a light beam emitted from said high-spatial coherence light source into at least three high-spatial coherence light beams, constituting said at least one light beam of low temporal coherence light, and to direct each of them to impinge on two corresponding opposite points of the first (Σt) and second (Σb) surfaces; or
- a low-spatial coherence light source and an optical arrangement configured and arranged to convert a light beam emitted from said low-spatial coherence light source into at least three high-spatial coherence light beams, constituting said at least one light beam of low temporal coherence light, and to direct each of them to impinge on two corresponding opposite points of the first (Σt) and second (Σb) surfaces.

12. The system according to claim 10, wherein the calibration system implements said low-coherence interferometry technique in the frequency-domain, according to a one-axis configuration where said reference reflective surface is either of the first (Σt) or the second (Σb) surface, and wherein said at least one light emitting arrangement comprises:
- a high-spatial coherence light source and an optical arrangement configured and arranged to divide a light beam emitted from said high-spatial coherence light source into at least three high-spatial coherence light beams, constituting said at least one light beam of low temporal coherence light, and to direct each of them to impinge on two corresponding opposite points of the first (Σt) and second (Σb) surfaces; or
- a low-spatial coherence light source and an optical arrangement configured and arranged to convert a light beam emitted from said low-spatial coherence light source into at least three high-spatial coherence light beams, constituting said at least one light beam of low temporal coherence light, and to direct each of them to impinge on two corresponding opposite points of the first (Σt) and second (Σb) surfaces.

13. The system according to claim 12, wherein said at least one photodetector and at least part of said processing means are implemented in a spectrophotometer configured and arranged to receive three collected interferometric light signals simultaneously, and to demodulate their modulated spectrum to decode the distances (z1, z2, z3) between each two corresponding opposite points of the first (Σt) and second (Σb) surfaces.

14. The system according to claim 13, further comprising three beam splitting lenses (BSL) each configured and arranged to collect one of said three interferometric light signals and to provide the same to the spectrophotometer through a common acquisition channel.

15. The system according to claim 12, 13 or 14, wherein the second surface (Σb) is said reference reflective surface, and the first wall defining the first surface (Σt) is an end wall of a rod (CR) which is also transparent to light within said certain wavelength range and which is configured and arranged to be longitudinally traversed by:
- the three high-spatial coherence light beams, so that each impinge on two corresponding opposite points of the first (Σt) and second (Σb) surfaces; and
- the three interferometric light signals resulting from the light reflected by the first (Σt) and second (Σb) surfaces.
